# EUROPÄISCHE PATENTSCHRIFT

(11) **EP 1 735 198 B1**
(45) Veröffentlichungstag und Bekanntmachung des Hinweises auf die Patenterteilung: **15.04.2009**
(21) Anmeldenummer: 05732150.7
(22) Anmeldetag: 26.02.2005
(51) Int. Cl.: B60S 1/52

(54) **VERSTELLBAR GELAGERTE SPRITZDÜSE FÜR SCHEIBENREINIGUNGSFLÜSSIGKEIT EINES KRAFTFAHRZEUGES**
ADJUSTABLY MOUNTED SPRAYING NOZZLE FOR WINDSHIELD WASHER FLUID OF A MOTOR VEHICLE
GICLEUR MONTE MOBILE POUR LIQUIDE LAVE-GLACE D'AUTOMOBILE

(30) Priorität: 16.04.2004 DE 102004018607
(43) Veröffentlichungstag der Anmeldung: 27.12.2006
(73) Patentinhaber: REHAU AG + Co, 95111 Rehau (DE); A. Raymond & Cie, 38028 Grenoble (FR)
(72) Erfinder: BEYER, Matthias, 71034 Böblingen (DE); STICKEL, Horst, 71032 Böblingen (DE); SPORER, Jürgen, 91573 Schönwald (DE); UTZ, Daniel, 74915 Bad Bellingen (DE); ZIELKE, Peter, 08626 Adorf/V. (DE)
(74) Vertreter: Bongen, Renaud & Partner
(86) Internationale Anmeldenummer: PCT/DE2005/000328
(87) Internationale Veröffentlichungsnummer: WO 2005/100108

(56) Entgegenhaltungen:
- EP-A- 1 106 456
- FR-A- 2 677 938
- US-A- 6 050 503
- PATENT ABSTRACTS OF JAPAN Bd. 012, Nr. 014 (M-659), 16. Januar 1988 (1988-01-16) -& JP 62 175242 A (MAZDA MOTOR CORP), 31. Juli 1987 (1987-07-31)

## Beschreibung

Die Erfindung betrifft eine verstellbar gelagerte Spritzdüse für Scheibenreinigungsflüssigkeit eines Kraftfahrzeuges nach dem Oberbegriff des Anspruchs 1.

Derartige Spritzdüsen sind beispielsweise bekannt aus US-A-6 050 503, FR-A-2 67 79 38, DE-A 19 74 60 59, JP-A-6 21 75 242 und DE-A-43 05 245.

In EP-A-1 106 456 ist eine gattungsähnliche Spritzdüse beschrieben, die keine Verstellantriebs-Handhabe aufweist. Bei dieser bekannten Ausführung ist die Spritzdüse auf einer Achse verschwenkbar gelagert, wobei die Spritzdüse mit dieser Achse über einen Schnappverschluss verbunden ist. Die Zufuhr der Scheibenreinigungsflüssigkeit erfolgt außerhalb der Lagerachse.

Aus DE-A-102 46 979 ist eine Spritzdüse ohne eine Verstellantriebs-Handhabe bekannt, der die Reinigungsflüssigkeit durch deren Schwenkachse hindurch im Bypass zugeführt wird.

Die Erfindung beschäftigt sich bei einer gattungsgemäßen Spritzdüse mit dem Problem, eine herstellungs- und montagegünstige Lagereinrichtung zu schaffen, in der die Spritzdüse einfach von außerhalb einer Abdeckung verstellt werden kann, wobei gleichzeitig eine konstruktiv möglichst einfache und funktionell sichere Reinigungsflüssigkeitszufuhr, die insbesondere in einem Bypass erfolgen soll, möglich sein soll.

Gelöst wird dieses Problem bei der gattungsgemäßen Spritzdüse durch die Ausbildung nach dem kennzeichnenden Merkmal des Anspruchs 1.

Zweckmäßige und vorteilhafte Ausführungen sind Gegenstand der Unteransprüche.

Die Erfindung beruht auf dem allgemeinen Gedanken, einen Teil der Lagereinrichtung der Spritzdüse gleichzeitig für die Zu-und Abfuhr der Reinigungsflüssigkeit zu nutzen, um die Einrichtung hierdurch besonders kostengünstig herstellen zu können.

Ein Vorteil der erfindungsgemäßen Spritzdüse besteht unter anderem darin, diese innerhalb eines Aufnahmeelementes derart lagern zu können, dass bei der Montage bereits in Fahrzeug-X-und Y-Richtung eine betriebsbereite, nicht mehr nachjustier-oder verstellbare Lagerung gegeben ist. Nachjustierbar beziehungsweise einstellbar ist dann lediglich noch die Spritzstrahlrichtung gegenüber einer, auf der Lagerachse senkrecht stehenden Z-Ebene. Für diese Justier- beziehungsweise Einstellmöglichkeit dient die Schwenklagerung innerhalb einer Y-Fahrzeugachse innerhalb des Aufnahmeelementes. Das Aufnahmeelement kann eine, vor einer Windschutzscheibe eines Fahrzeuges liegende Verkleidung sein, die in einem am unteren Ende der Windschutzscheibe vor dieser liegenden Kanal der Windschutzscheibe gegenüberliegt. Die Verkleidung bildet insgesamt einen Hohlraum, in dem sich die erfindungsgemäße Spritzdüse befindet. Die Lager, in denen die Spritzdüse schwenkbar lagert, sind vorteilhafterweise als Schnapp- beziehungsweise Rastverschlusslager ausgebildet. Dies bedeutet, dass ein einfaches Fügen der Lager möglich ist. Stutzen in der Lagerachse der Spritzdüse ermöglichen ein erfindungsgemäßes Einleiten von Reinigungsflüssigkeit in die Spritzdüse beziehungsweise Hindurchleiten dieser Flüssigkeit durch die Spritzdüse zu einer eventuell vorhandenen, weiteren Spritzdüse.

Zum Verschwenken der Spritzdüse dient ein Verstellantrieb mit einem fest an der Spritzdüse vorgesehenen Widerlager und einer Verstellantriebs-Handhabe, die mit dem Widerlager zusammenwirkt. Die Verstellhandhabe ist in dem Aufnahmeelement der Spritzdüse verstellbar gelagert. Der Verstellantrieb kann beispielsweise ein Gewindespindelantrieb sein. Die Verstellantriebs-Handhabe ist dann die Gewindespindel versehen mit einem Handrad.

Die Spritzdüse einschließlich ihres Verstellantriebes ist in dem Inneren des Aufnahmeelementes derart gelagert, dass nach außen lediglich eine Verbindung über eine erste und eine zweite Öffnung in dem von dem Verkleidungsteil gebildeten Aufnahmeelement gegeben sind. Durch die erste Öffnung kann mindestens ein Reinigungsflüssigkeitsstrahl aus der Spritzdüse auf eine zugeordnete, zu bespritzende Scheibe hindurchtreten. Die zweite Öffnung dient zur Bedienung des Handrades der Gewindespindel des Spritzdüsen-Verstellantriebes. Der Gewindespindelantrieb kann mit einer Selbsthemmung derart ausgeführt sein, dass eine selbsttätige Verstellung ausgeschlossen ist.

Anstelle des Gewindespindelantriebes kann ein beliebiger anderer Verstellantrieb vorgesehen sein. Voraussetzung ist lediglich, dass eine Verstellung von außerhalb des Verkleidungsteiles einfach und schnell möglich ist und zwar bei einer sich nicht selbstständig verstellbaren Einstelllage der Spritzdüse. Ebenso wie die Spritzdüse selbst ist die Verstellantriebshandhabe, beispielsweise die Gewindespindel mit einem Handrad in Schnapp- beziehungsweise Rastverschlusslagern gelagert.

Ein besonders vorteilhaftes, nachstehend noch näher erläutertes Ausführungsbeispiel ist in der Zeichnung dargestellt.

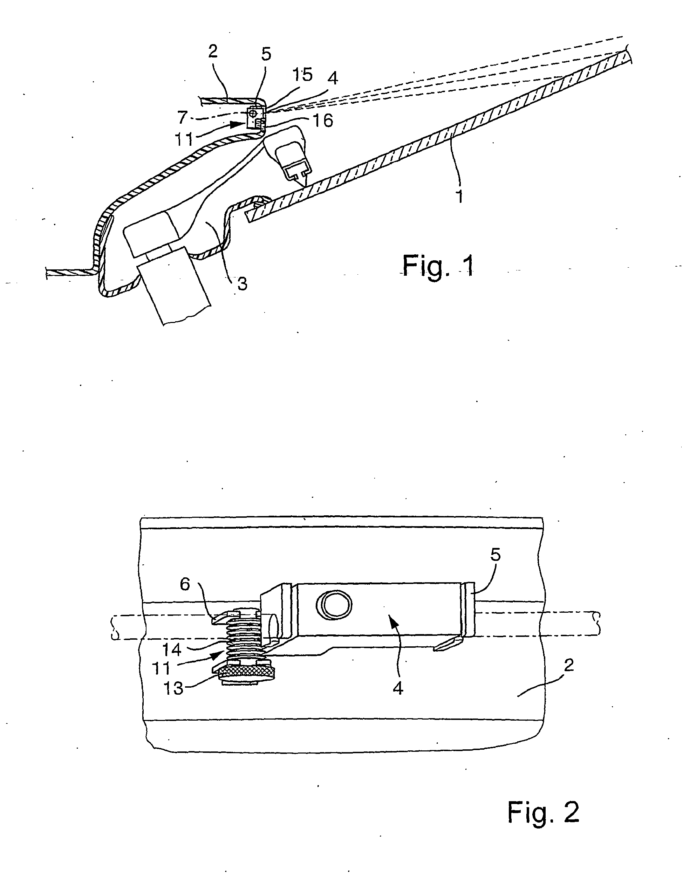

In dieser zeigen
- Fig. 1: einen Längsschnitt durch den vor einer Fahrzeugwindschutzscheibe liegenden Fahrzeugbereich als Ausschnitt,
- Fig. 2: eine Ansicht auf eine in einem vor der Windschutzscheibe beabstandeten Verkleidungselement schwenkbar gelagerte, in Fig. 1 gezeigte Spritzdüse,
- Fig. 3: eine Ansicht auf die Lagerelemente innerhalb des Verkleidungsteiles bei noch nicht eingesetzter Spritzdüse,
- Fig. 4: eine Ansicht auf eine noch nicht montierte Spritzdüse mit angeschlossenen Versorgungsleitungen und komplettem Verstellantrieb,
- Fig. 5: eine Ansicht auf das Verkleidungselement im Bereich der zu der Spritzdüse führenden Öffnungen mit einer Blickrichtung von der Frontscheibe aus.

Vor einer Windschutzscheibe 1 befindet sich in dessen unterem Bereich ein nach oben zur Windschutzscheibe 1 hin offener, vorne von einem innen hohlen Verkleidungselement 2 begrenzter Kanal 3. In dem oberen inneren Bereich des Verkleidungselementes 2 ist eine Spritzdüse 4 für Scheibenreinigungsflüssigkeit in einer Fahrzeug-Y-Achse schwenkbar gelagert. Das Bekleidungselement 2 dient als Aufnahmeelement für die Spritzdüse 4.

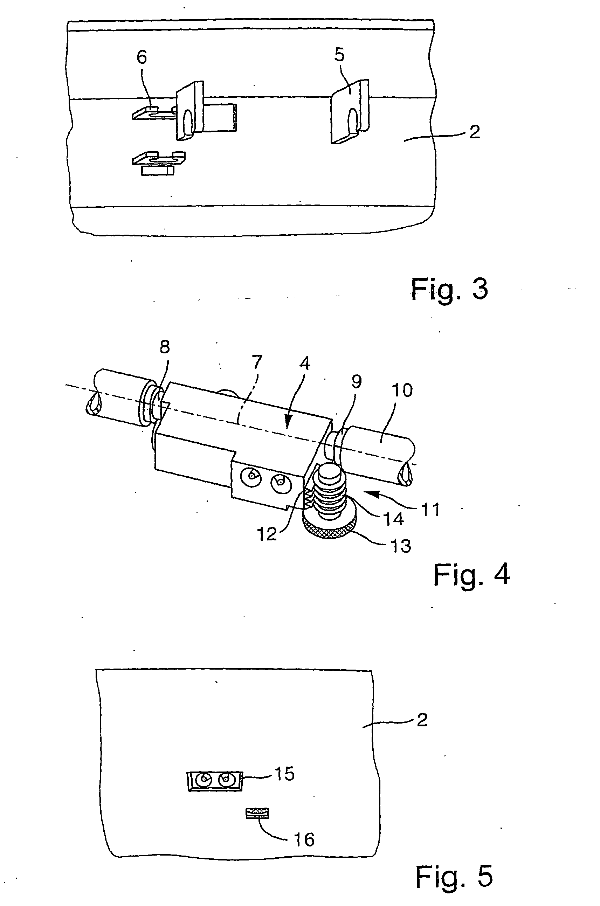

Die in das Verkleidungselement 2 integrierten Lagerelemente zur Lagerung der Spritzdüse 4 sind am besten aus Fig. 3 erkennbar. Danach sind diese Lagerelemente jeweils als Stege 5 und 6 ausgebildet. Diese Stege 5, 6 enthalten nutförmige Öffnungen, wobei die Nuten jeweils ein Kreisprofil besitzen. Die Nutöffnungen dieser Stege 5 und 6 besitzen eine durch eine elastische Verformung der Nutstege aufweitbare Spaltweite.

Die Spritzdüse 4, deren Ausbildung am besten aus Fig. 4 entnommen werden kann, besitzt eine Lagerachse 7 mit zwei deren Enden bildenden Lagerzapfen 8.

Die Lagerzapfen 8 enden nach axial außen in Stutzen 9, an die jeweils eine Reinigungsflüssigkeits-Versorgungsleitung 10 anschließbar ist. Über die Lagerzapfen 8 kann die Spritzdüse 4 in die Stege 5 eingeschnappt werden. In eingeschnapptem Zustand ist die Spritzdüse 4 um deren Lagerachse 7 schwenkbar.

Das Verschwenken der Spritzdüse 4 erfolgt über einen Verstellantrieb 11, der bei dem vorliegenden Ausführungsbeispiel als ein Gewindespindelantrieb ausgeführt ist. Im Einzelnen aufgebaut ist der Gewindespindel-Verstellantrieb 11 aus einem gerillten Widerlager 12, das fest mit der Spritzdüse 4 verbunden ist, beziehungsweise direkt an diese angeformt ist und einer mit einem Handrad 13 versehenen Gewindespindel 14, die in den Stegen 6 des Verkleidungselementes 2 drehbar gelagert ist. Ebenso wie die Spritzdüse 4 über einen Schnappverschluss in den Stegen 5 gelagert ist, ist auch die Gewindespindel 14 in den Stegen 6 des Verkleidungselementes 2 eingeschnappt.

Durch das Verkleidungselement 2 hindurch treten können die in der Spritzdüse 4 erzeugten Spritzstrahlen durch eine dort vorgesehene Öffnung 15. Durch eine weitere Öffnung 16 innerhalb des Verkleidungsteiles 2, die von dem Kanal 3 aus zugänglich ist, kann das dieser Öffnung 16 zugeordnete Handrad 13 der Gewindespindel 14 betätigt werden.

Bei der Fahrzeugmontage kann eine erfindungsgemäß ausgeführte und gelagerte Spritzdüse 4 einfach vormontiert sein und bedarf nach dieser Vormontage lediglich noch einer Feinjustierung durch Betätigen des Handrades 13 des Verstellantriebes 11.

## Patentansprüche

1. Verstellbar gelagerte Spritzdüse (4) für Scheibenreinigungsflüssigkeit eines Kraftfahrzeuges, bei der
- die Spritzdüse (4) eine Lagerachse (7), mit der sie an einem Fahrzeug um eine Y-Achse dieses Fahrzeuges schwenkbar befestigt werden kann, besitzt,
- die Spritzdüse (4) für ein Verschwenken um ihre Lagerachse (7) mit einem Verstellmittel-Element (12) versehen ist,
- das Verstellmittel-Element für ein Zusammenwirken mit einer Verstellantriebs-Handhabe (14) ausgebildet ist,
- die Lagerachse (7) der Spritzdüse (4) als Bestandteil eines Schnappverschlusses zwischen der Spritzdüse (4) und dem Aufnahmeelement (2) ausgebildet ist, **dadurch gekennzeichnet,**
- **dass** die Lagerachse (7) mindestens einen Stutzen (9) für in die Spritzdüse (4) einzuführende und gegebenenfalls durch diese im Bypass hindurch zu leitende Reinigungsflüssigkeit enthält.

2. Spritzdüse nach Anspruch 1,
**dadurch gekennzeichnet,**
**dass** das Verstellmittel-Element (12) als Widerlager eines Gewindespindel-Verstellantriebes (11) ausgebildet ist.

3. In einem Aufnahmeelement (2) gelagerte Spritzdüse (4) nach Anspruch 2,
**dadurch gekennzeichnet,**
**dass** das spritzdüsenseitige Widerlager des Gewindespindelantriebes (11) mit einer in dem Aufnahmeelement (2) über einen Schnappverschluss gelagerten Verstellantriebs-Handhabe (14) zusammenwirkt.

4. In einem Aufnahmeelement (2) gelagerte Spritzdüse (4) nach Anspruch 3,
**dadurch gekennzeichnet,**
**dass** die Verstellantriebs-Handhabe (14) als eine Gewindespindel ausgebindet ist.

5. In einem Aufnahmeelement (2) gelagerte Spritzdüse (4) nach Anspruch 4,
**dadurch gekennzeichnet,**
**dass** die Gewindespindel (14) mit einem von Hand verdrehbaren Handrad (13) versehen ist.

6. In einem Aufnahmeelement (2) gelagerte Spritzdüse (4) nach einem der vorhergehenden Ansprüche, wobei das Aufnahmeelement (2) einen Hohlraum besitzt,
**gekennzeichnet durch** die Merkmale,
- die Spritzdüse (4) liegt innerhalb des Hohlraumes,
- in der Außenwandung des Hohlraumes sind der Spritzdüse (4) eine erste und eine zweite Öffnung (15, 16) zugeordnet,
- die erste Öffnung (15) dient zur Durchleitung mindestens eines auf eine zugeordnete Scheibe (1) zu richtenden Spritzstrahles,
- die zweite Öffnung (16) ermöglicht eine Betätigung der Verstellantriebs-Handhabe (14) von außerhalb des Hohlraumes.

7. In einem Aufnahmeelement (2) gelagerten Spritzdüse nach einem der Ansprüche 3 bis 6,
**dadurch gekennzeichnet,**
**dass** das Aufnahmeelement (2) Stege (5) bis (6) als Schnappverschlussmittel für die Schnappverschluss-Schwenklagerung der Spritzdüse (4) umfasst.

## Claims

1. An adjustably mounted spraying nozzle (4) for windshield washer fluid of a motor vehicle, where
- the spraying nozzle (4) has a bearing axis (7) by means of which it can be attached to a vehicle so as to be capable of pivoting about a Y-axis of said vehicle,
- the spraying nozzle (4) is provided with an adjusting means element (12) for pivoting about its bearing axis (7),
- the adjusting means element is embodied for interacting with an adjustment drive handle (14),
- the bearing axis (7) of the spraying nozzle (4) is embodied as a component of a spring lock between the spraying nozzle (4) and the accommodating element (2), **characterized in**
- **that** the bearing axis (7) includes at least one nozzle (9) for cleaning fluid, which is to be introduced into the spraying nozzle (4) and which, if applicable, are to be guided through said spraying nozzle (4) in the bypass.

2. The spraying nozzle according to claim 1,
**characterized in**
**that** the adjusting means element (12) is embodied as a thrust bearing of a threaded spindle adjustment drive (11).

3. The spraying nozzle (4) according to claim 2 mounted in an accommodating element (2),
**characterized in**
**that** the thrust bearing of the threaded spindle adjustment drive (11) on the spraying nozzle side interacts with an adjustment drive handle (14), which is mounted in the accommodating element (2) by means of a spring lock.

4. The spraying nozzle (4) according to claim 3 mounted in an accommodating element (2),
**characterized in**
**that** the adjustment drive handle (14) is embodied as a threaded spindle.

5. The spraying nozzle (4) according to claim 4 mounted in an accommodating element (2),
**characterized in**
**that** the threaded spindle (14) is provided with a hand wheel (13), which can be turned manually.

6. The spraying nozzle (4) according to one of the preceding claims mounted in an accommodating element (2), wherein the accommodating element (2) has a cavity,
**characterized by** the features
- the spraying nozzle (4) is located within the cavity,
- a first and a second opening (15, 16) are assigned to the spraying nozzle (4) in the outer wall of the cavity,
- the first opening (15) serves to convey at least one spray jet, which is to be directed onto an assigned windshield (1),
- the second opening (16) makes it possible to actuate the adjustment drive handle (14) from outside of the cavity.

7. The spraying nozzle according to one of claims 3 to 6 mounted in an accommodating element (2),
**characterized in**
**that** the accommodating element (2) comprises bars (5) to (6) as spring lock means for the spring lock swivel bearing of the spraying nozzle (4).

## Revendications

1. Bec de pulvérisation (4) positionné de manière déplaçable, pour liquide de nettoyage de disques d'un véhicule automobile, dans lequel
- le bec de pulvérisation (4) possède un axe de palier (7), avec lequel il peut être fixé sur un véhicule de manière à basculer autour d'un axe Y de ce véhicule,
- le bec de pulvérisation (4) est pourvu d'un élément de moyen de déplacement (12) à des fins de basculement autour de son axe de palier (7),
- l'élément de moyen de déplacement est configuré à des fins de coopération avec un actionneur d'entraînement de déplacement (14),
- l'axe de palier (7) du bec de pulvérisation (4) est configuré comme une partie intégrante d'une fermeture par encliquetage entre le bec de pulvérisation (4) et l'élément de réceptacle (2), **caractérisé en ce que**
- l'axe de palier (7) contient au moins un embout (9) destiné au liquide de nettoyage à injecter à l'intérieur du bec de pulvérisation (4) et le cas échéant à guider à travers celui-ci en dérivation.

2. Bec de pulvérisation selon la revendication 1,
**caractérisé en ce que**
l'élément de moyen de déplacement (12) est configuré comme un contre-appui d'un entraînement de déplacement de broche filetée (11).

3. Bec de pulvérisation (4) positionné dans un élément de réceptacle (2) selon la revendication 2,
**caractérisé en ce que**
le contre-appui du côté du bec de pulvérisation de l'entraînement de broche filetée (11) coopère avec un actionneur d'entraînement de déplacement (14) positionné dans l'élément de réceptacle (2) par l'intermédiaire d'une fermeture par encliquetage.

4. Bec de pulvérisation (4) positionné dans un élément de réceptacle (2) selon la revendication 3,
**caractérisé en ce que**
l'actionneur d'entraînement de déplacement (14) est configuré comme une broche filetée.

5. Bec de pulvérisation (4) positionné dans un élément de réceptacle (2) selon la revendication 4,
**caractérisé en ce que**
le broche filetée (14) est pourvue d'une roue manuelle (13) pouvant être tournée à la main.

6. Bec de pulvérisation (4) positionné dans un élément de réceptacle (2) selon une des revendications précédentes, dans lequel l'élément de réceptacle (2) possède un espace creux,
**caractérisé par** les caractéristiques
- le bec de pulvérisation (4) est situé à l'intérieur de l'espace creux,
- une première et une deuxième ouverture (15, 16) sont coordonnées au bec de pulvérisation (4) dans la paroi extérieure de l'espace creux,
- la première ouverture (15) sert au passage d'au moins un jet de pulvérisation à diriger sur un disque coordonné (1),
- la deuxième ouverture (16) permet un actionnement de l'actionneur d'entraînement de déplacement (14) depuis l'extérieur de l'espace creux.

7. Bec de pulvérisation positionné dans un élément de réceptacle (2) selon une des revendications 3 à 6,
**caractérisé en ce que**
l'élément de réceptacle (2) comprend des gradins (5) à (6) en tant que moyens de fermeture par encliquetage pour le positionnement basculable accompagné d'une fermeture par encliquetage du bec de pulvérisation (4).
